# EUROPEAN PATENT APPLICATION

(11) **EP 1 548 270 A1**
(43) Date of publication of application: **29.06.2005**
(21) Application number: 04106164.9
(22) Date of filing: 29.11.2004
(51) Int. Cl.: F02M 25/08, F16K 1/52, F16K 17/04

(54) **Connector having an embedded valve**

(30) Priority: 28.11.2003 JP 2003400424
(71) Applicant: Tokai Rubber Industries, Ltd., Komaki-shi, Aichi-ken, 485-8550 (JP)
(72) Inventor: Takayanagi, Akira, 485-8550, Aichi-Ken (JP); Miyajima, Atsuo, 485-8550, Aichi-ken (JP)
(74) Representative: Poulin, Gérard

(57) **Abstract**

A connector having an embedded valve that can ensure discharge of fluid flow at a stable flow rate. The connector comprises an upstream body component (9) having a valve housing (33) for housing a valve body (57); and an outlet component (35) formed integrally with the downstream valve housing component (33) in the downstream axial direction, The outlet component (35) is constructed with a cylindrical base (37) which forms an outlet passageway downstream of the embedded valve and includes a fitting component (39). The fitting component (39) is a downstream short extension of the cylindrical base (37) which extends along the longitudinal axis of the connector through the center length of second connector component (13). The fitting component (39) is part of the upstream portion of the cylindrical base (37). The outlet passageway (43) of outlet component (35) and the inside second connector component (13) communicate with each other through exit-orifice (45).

## Description

### TECHNICAL FIELD

The present invention relates to a connector having a valve embedded therein for use in evaporation piping of fluid through the connector, for example, in the fuel supply system of an automobile.

### BACKGROUND TECHNOLOGY

It is desirable that the vapor generated in the fuel tank of an automobile be contained such that it will not be discharged to the atmosphere. A popular vapor discharge prevention mechanism that provides such a treatment is the type in which the generated vapor is adsorbed in a canister. The vapor discharge prevention mechanism of this type requires evaporation piping for connecting a fuel tank with a canister or breather circuit, or for connecting a fuel tank with inlet piping, for which a reduction in the amount of vapor generated during the fuel supply is essential and the canister size must be reduced. A one-way valve or a check valve is used to serve the above purposes by maintaining the appropriate pressure inside the fuel tank.

Such a one-way valve used for evaporation piping or breather piping, for example is embedded in the connector housing of a piping connector as taught in U.S. Patent 6,397,884 and Japanese Unexamined Patent Application Publication No.2003-028010. The embedded valve comprises: a valve seat provided to the path or through-path of the connector housing; a valve body for opening or closing the valve gate and restricting the flow rate of the vapor flowing from the fuel tank to the canister or inlet-pipe side; and, a compression coil spring which pushes the valve body toward the fuel tank. As the vapor pressure increases inside the fuel tank, the valve body moves to the canister side or inlet against the spring force of the compression coil spring, thereby opening the valve gate. As the vapor pressure increases, the accumulated vapor in the fuel tank flows into the canister or inlet pipe through the embedded valve.

In the embedded valve configuration as described above, the amount of vapor flowing from the fuel tank side to the canister side or to the inlet pipe side is mostly dependent on how much the valve gate that is seated on the valve body opens. Hence, the spring characteristics determine not only the minimum pressure applied to the valve body to open the valve gate, but also the vapor flow, rate from the fuel tank side to the canister or inlet-pipe side.

Nevertheless, it is likely that the characteristics of a compression coil spring, particularly a spring of low rigidity, will change over time due to fatigue or aging. As a result, the mode of controlling the vapor flow rate must be changed significantly since the conventional configuration controls the entire vapor flow solely by the spring characteristics of a compression coil spring, in other words, the characteristics of the valve are dependent on those of the spring.

In the vapor control method which is dependent only on the spring force of a compression coil spring, the motions of a valve body can become unstable after the valve is open: for example, any change in the vapor pressure shakes the valve body. Unstable motions of the valve body cannot stabilize the vapor flow rate. Yet, minimizing the vapor flow rate is desirable in order to suppress evaporation so as to maintain a low vapor level thereof.

The objective of the present invention is, therefore, to provide a connector with a long-life embedded valve that can ensure a stable flow rate.

The connector of the present invention comprises: a connector housing having a path for fluid flow through the connector, an embedded valve embedded in the fluid path of the connector housing , a first connector component provided upstream of the embedded valve for upstream piping and a second connector component provided downstream of the embedded valve for downstream piping; wherein the embedded valve comprises: a valve seat provided in the fluid path of the connector housing having a valve gate; a valve body which opens or closes the valve gate on the valve seat; a compression coil spring which pushes the valve body in the upstream direction , and an exit-orifice disposed downstream of the valve seat for restricting the discharge rate of fluid flow through the downstream piping. The spring characteristics of the compression coil spring are; for example, set for the purpose of ensuring a given pressure required to open the valve. In addition, the cross-sectional area to diameter ratio at the exit-orifice or the cross-sectional area to diameter ratio of the fluid path at the exit orifice is set on the assumption that, for example, a given pressure results in a given flow rate from upstream to downstream. The characteristics of a valve embedded in the connector of the present invention are dependent on the exit- orifice and the characteristics of the compression coil spring. Hence, the valve body motion can be stabilized.

Nonetheless, if there is a disturbance in the fluid flow coming from the upstream piping, the valve body may slide along the inner circumference of the path being shaken in a radial direction. If the valve body slides along the inner circumference of the path, noise from abrasion occurs and is transmitted to the passenger compartment of an automobile, thereby disturbing the silence thereof. For this reason, it is desirable that an inlet-end orifice is provided more toward upstream than the valve seat provided in the path of the connector housing so as to stabilize the fluid flow coming from the upstream piping.

The connector and embedded valve of the present invention has excellent durability because of its ability or certain valve characteristics to withstand aging. In addition, the flow rate of the connector is not controlled only by the force derived from the compression coil spring, and motions of the valve body are stabilized to produce a minimal effect on the fluid flow rate. This effectively prevents the internal fluid from evaporation and provides a good degree of freedom in designing of the connector. Further, the exit-end orifice and the compression coil spring together will determine the valve characteristics. Accordingly, the number of compression coil springs to be managed is reduced and the components to be assembled are easily obtained while reducing manufacturing costs thereof.

### BRIEF DESCRIPTION OF THE DRAWINGS

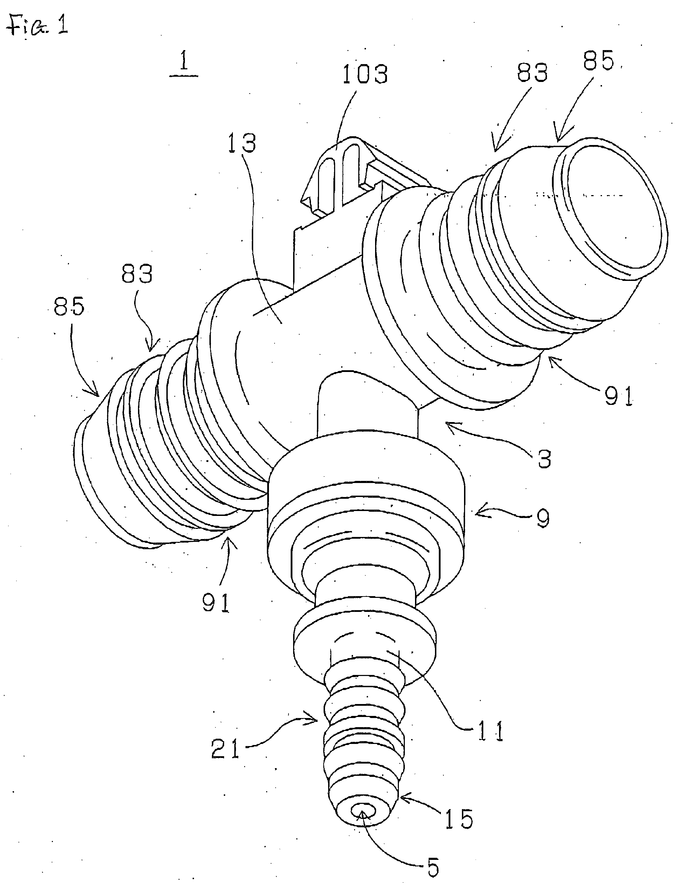

Figure 1 is a perspective view of a connector of the present invention having an embedded valve;
Figure 2 is a cross-sectional view of the connector of Figure 1;
Figure 3 is an enlarged cross-sectional view of the first connector component part of the connector of Figure 1;
Figure 4 is a perspective view of the valve body of the embedded check valve in Figure 1;
Figure 5 is a diagram illustrating the connector of Figure 1 being used for evaporation piping;
Figure 6 is a diagram illustrating the valve body of Figure 3 in the open state, and
Figure 7 is a diagram illustrating the pressure-flow rate characteristics as a function of the diameter of the exit-end orifice.

Embodiments of the present invention are described herein with reference to the drawings.

Connector 1 having an embedded valve used for the evaporation piping of a gasoline fuel tank comprises for example: connector housing 3 made of polyacetal (POM); and check valve 7 embedded in path 5 of connector housing 3. Connector housing 3 further comprises: body component 9, having embedded check valve 7; first connector component 11; and second connector component 13 such that these three components are integrated to provide a T-shape wherein first connector component 11 with a smaller diameter is formed upstream and extends along the axis; second connector component 13 with a larger diameter is formed downstream and extends in the direction orthogonal to the axial direction.

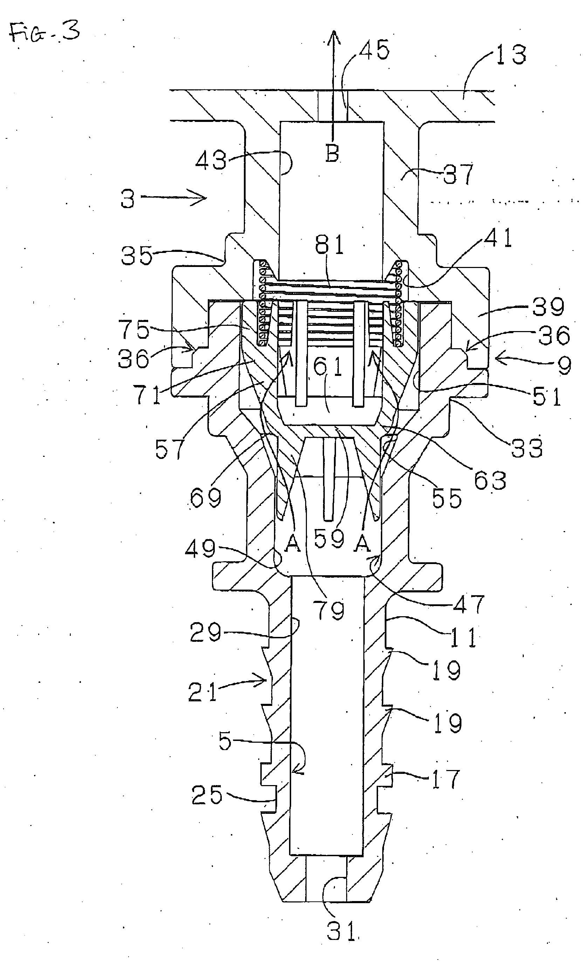

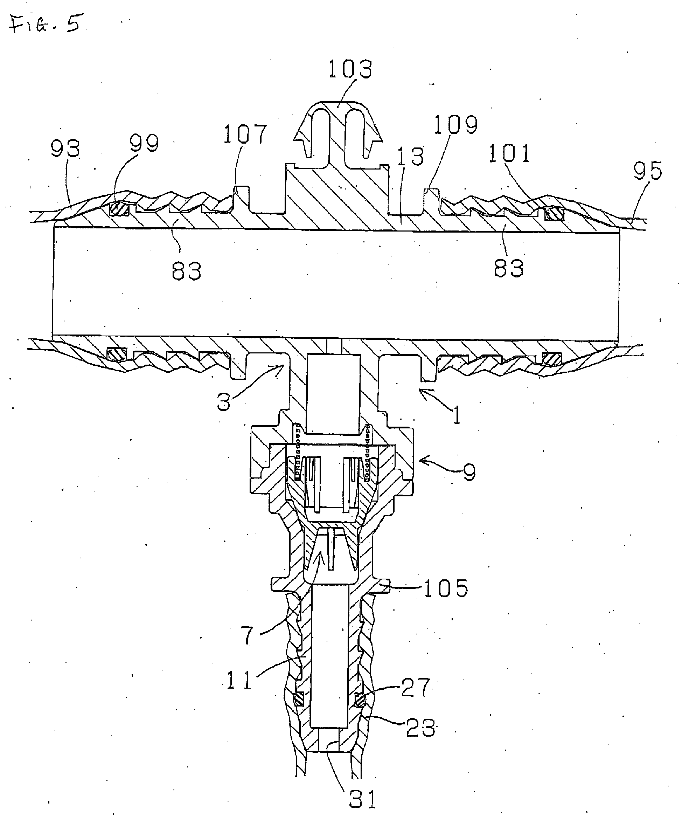

As shown in Figure 3, first connector component 11 is constructed with: upstream component 15 and downstream component 21; wherein upstream component 15 has an outer circumferential plane with a diameter gradually expanding in the downstream direction; two protruding flange components 19, 19 with a triangle shape in cross-section having a diameter expanding in the downstream direction are provided at a distance along the axis one after another from upstream to downstream. A resin tube for upstream piping (hereinafter referred to as first resin tube 23), as shown in Figure 5, is tightly fitted to the outer circumference or outer circumferential plane to connect the resin tube thereto. Upstream outer circumferential plane 25 of downstream component 21 between upstream component 15 and protruding flange component 17 is formed with a small diameter or is formed as a relatively deep groove. Seal-ring or first seal-ring 27, shown in Figure 5, is placed on upstream outer circumferential plane 25 to fit the resin tube thereto.

The inner circumferential plane of first connector component 11 is a cylindrical inner surface throughout the length and inlet 29 or a part of path 5 is provided thereon. It also constitutes inlet orifice 31 having, for example, half of the diameter of inlet 29 at the upstream edge or tip portion.

Upstream body component 9 of connector housing 3 has valve housing component 33 formed integrally with cylindrical first connector component 11 having a small diameter; downstream body component 9 has outlet component 35 formed integrally with cylindrical second connector component 13 having a large diameter; valve housing 33 and outlet component 35 are integrated by tightening the upstream portion of outlet component 35 about the outer circumference of the downstream portion of valve housing component 33 during ultrasound welding. Reference Numeral 36 is such a welded portion. Outlet component 35 is constructed with cylindrical base 37 and fitting component 39 having a large diameter wherein cylindrical base 37 is a downstream short extension along the axis which is incorporated with the center length of second connector component 13; fitting component 39 is incorporated with the upstream portion of cylindrical base 37 such that fitting component 39 is fitted to the outer circumference of the downstream portion of valve housing component 33. Annular spring-receiving groove 41 is provided to the annular plane of upstream cylindrical base 37. The inner plane of cylindrical base 37 is a simple cylinder and constitutes outlet 43. Outlet 43 and the inside second connector component 13 communicate with each other through exit-end orifice 45. Exit-end orifice 45 is given about ¼ of the inner diameter of outlet 43 on cylindrical base 37.

Upstream inner plane 47 of valve housing component 33 of connector housing 3 is a simple cylindrical plane extending with a diameter which is 1.5 times larger than that of outlet 29 of first connector component 11, and provides guiding hole 49 which is a part of path 5 having a nearly equal diameter to that of outlet 43 of cylindrical base 37; downstream inner plane 47 is a simple cylindrical plane extending with a diameter which is 1.7 times longer than that of guiding hole 49, and provides sliding hole 51 which is a part of path 5 as well. Between slide 51 and guide 49, inner plane 47 of valve housing 33 has first taper component 53 and second taper component 55, wherein first taper component 53 extends from one axial end of slide hole 51 toward upstream inner plane 47 in such a manner that the diameter of valve housing component 33 reduces relatively sharply in a tapered manner; second taper component 55 extends from the upstream of first tapered component 53 to the other axial end of the guiding hole in such a manner that the diameter of housing component 33 reduces relatively gradually in a tapered manner. Second tapered component 55 or the inner plane thereof functions as a valve seat, providing a valve gate inside the valve seat.

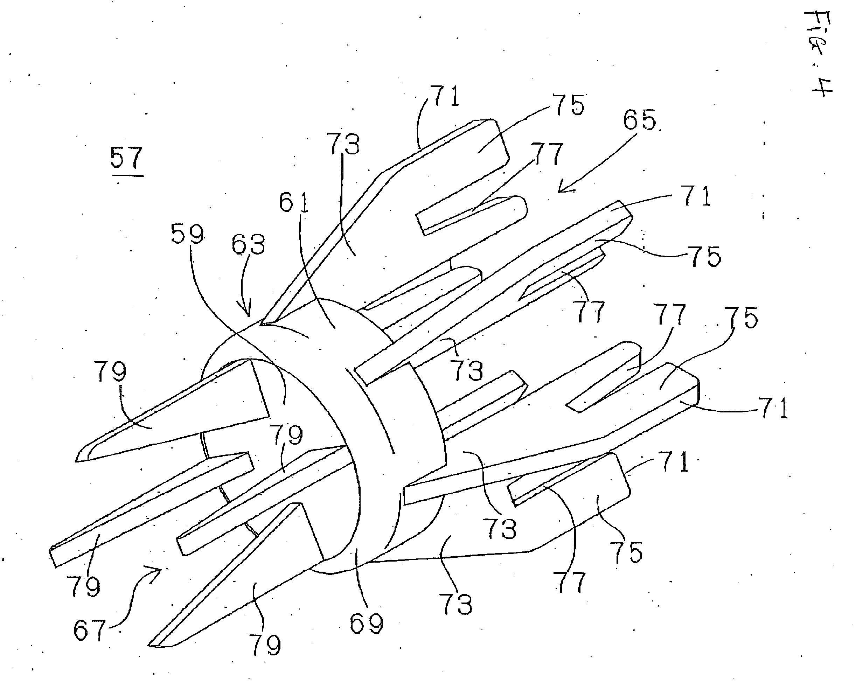

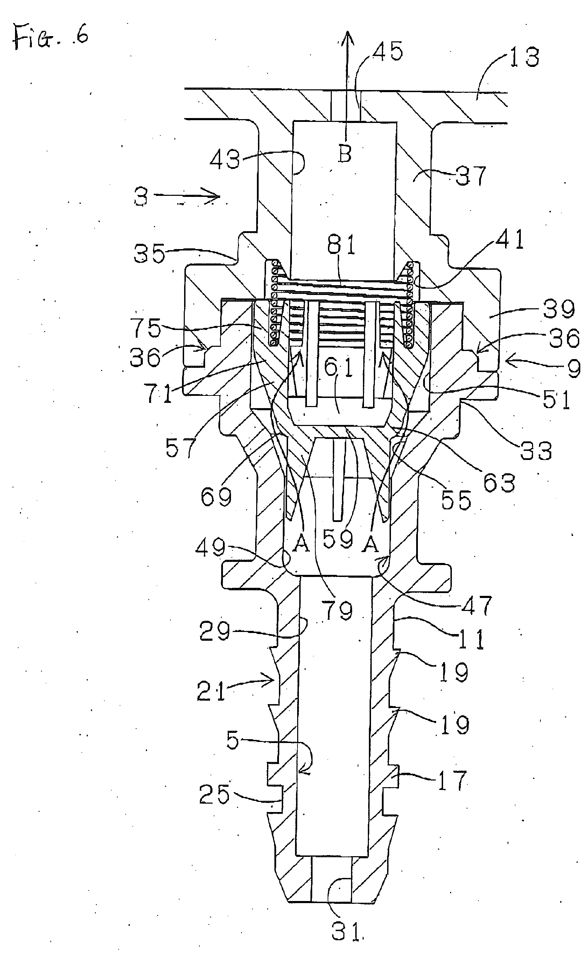

Valve body 57 constituting embedded check valve 7 is housed in valve housing component 33. As depicted in detail in Figure 4, valve body 57 is integrally formed with blockage component 63, downstream guide 65, and upstream guide 67 wherein blockage component 63 is formed integrally about the outer circumference of thin disk-like component 59 with annular component 61 slightly extending in the downstream direction; upstream guide 67 extends from the outer circumference of disk-like component 59 of blockage component 63 in the upstream direction. The material used for valve body 57 is POM. Figure 4 is a perspective view of valve body 57. In blockage component 63, connecting outer circumferential plane 69 for disk-like component 59 and annular component 61 is formed in such a manner that connecting outer circumferential plane 69 circularly expands outward in cross-section, thereby providing a contact plane which closely touches second tapered component 55 or a valve seat having a liner cross-section [(See Figure 6)].

Downstream guide 65 is constructed with multiple, specifically six, plate-like downstream sliding legs 71 that are formed integrally with annular component 61 about the circumference thereof at an even distance, more specifically, at a 60 degree angle. Each downstream sliding leg 71 comprises: holding component 73 provided on annular component 61; and rectangular sliding component 75 formed integrally with the other end of holding component 73 along the axis in such a manner that the thickness direction of these plates corresponds to the tangent direction of annular component 61. The distance from the center of annular component 61 to the outer end plane along the radius of each sliding component 75 is equal to or somewhat smaller than the radius of the inner circumferential plane of sliding hole 51; the outer end plane along the radius of each sliding component 75 is formed as a plane extending along the axis of sliding component 75 such that the downstream connector 13 can slide along the inner circumferential plane of sliding hole 51. Holding grooves 77 extending or having slits pointing in the upstream direction are formed to be at nearly identical positions along the radius of annular component 61.

Upstream sliding guide 67 is constructed with multiple, specifically four, plate-like sliding legs 79 formed integrally with the outer circumference of disk-like component 59 at even intervals, specifically at 90 degree angles, about the circumference thereof. Upstream sliding legs 79 are arranged to form right angles with the thickness direction of the plates, which corresponds to the tangential direction of disk-like component 59, and with the radial-outer end of the plates extending along the axis. The distance between the central part of disk-like component 59 and the outer end or outer end plane along the radius of upstream sliding leg 79 is approximately equal to or slightly smaller than the radius of the inner circumferential plane of guiding hole 49. The outer end plane along the radius of upstream sliding leg 79 is formed such that it can slide along the inner circumferential plane of guiding hole 49.

The upstream portion of valve body 57 of the above configuration is housed in holding groove 77 formed on sliding component 75 of downstream sliding leg 71. It is also pushed by compression coil spring 81 in the upstream direction to cause upstream guide 67 to enter guiding hole 49 of body component 9 and to cause connecting outer circumferential plane 69 of blockage component 63 to touch approximately the mid point along the axis of second tapered component 55 or the valve seat, wherein the downstream portion of compression coil spring 81 is housed in spring receiving groove 41 on cylindrical base 37.

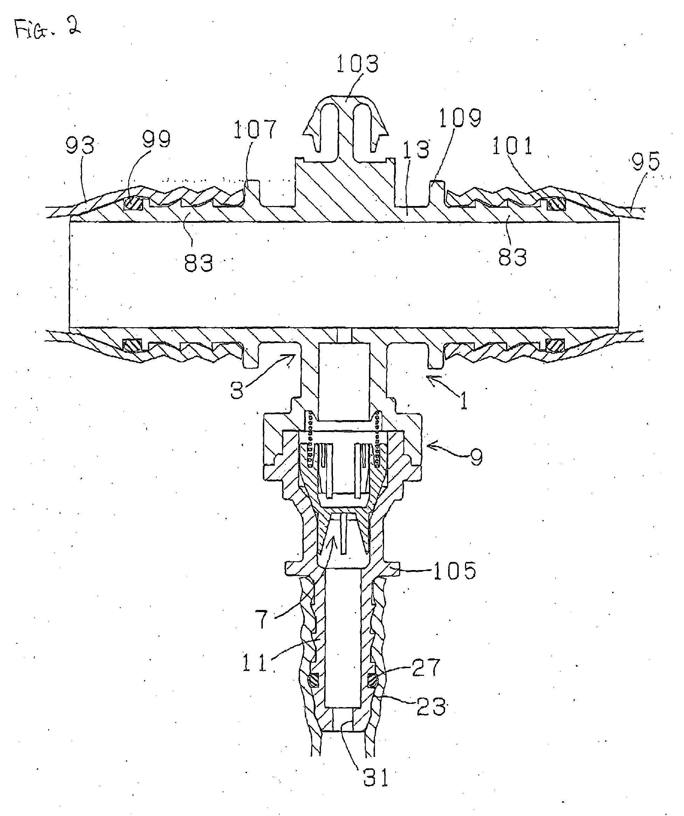

As is apparent from Figure 2, second connector component 13 has connector components 83, 83 of the same configuration at the first and second end along the length direction or the direction perpendicular to the axis. Each connector component 83 comprises: length-wise outer side component 85 and length-wise center side component 91 wherein outer side component 85 has an outer circumferential plane whose diameter increases toward the center along the length thereof; center side component 91 has protruding flange component 87 in a rectangular shape in cross-section and two protruding flange components 89, 89 in a triangular shape in cross-section; all of 87, 89, and 89 are formed about the outer circumferential plane, which is a simple cylindrical outer plane extending at the center side of length-wise outer side component 85; the diameter of the outer circumferential plane thereof increases towards the center along the length; and two protruding flange components 89, 89 are formed one after another from the outside to the center side at a distance along the length. The resin tubes of the downstream piping consists of second resin tube 93 and third resin tube 95 (See Figure 5) and these are tightly fitted to the outer circumference or outer circumferential plane to provide a connection thereof. Length-wise outer circumferential plane 97 on center side component 91 between outer side component 85 along the length and protruding flange component 87 is formed as a relatively deep annular groove. Accordingly, the sealing rings or second sealing ring 99 and third sealing ring 105 (See Figure 5) are arranged along the length to fit the resin tube thereto. Note that Reference Numeral 103 is a hook component.

Figure 5 is a diagram illustrating connector 1 with an embedded valve used for evaporation piping.

The evaporation piping is configured as follows: first resin tube 23, which extends from a gasoline fuel tank, is fitted to the outer circumference of first connector component 11 of connector 1 with an embedded valve. Second resin tube 93 (downstream piping) for use in upstream piping, which is different from first resin tube 23, is fitted to connector elements 83 of second connector component 13; and third resin tube 95 (downstream piping) for use in downstream piping, which is not the piping in which first resin tube 23 and second resin tube 93 are used, is fitted to other connector elements 83 of second connector component 13. In the figure, Reference Numerals 105, 107, and 109 are flanges that regulate the amount of the resin tube to be fitted or pressed therein.

Now, if the vapor pressure increases in a gasoline fuel tank which is the case illustrated in Figure 6, valve body 57 moves in the downstream direction against a spring force generated by compression coil spring 81 to cause the valve body 57 to open (Figure 6 is a diagram illustrating valve body 57 in the open state). As the valve moves in the downstream direction and connecting outer circumferential plane 69 of blockage component 63 leaves the midpoint of second tapered component 55 along the axis, vapor flows into sliding hole 51 (arrow A) through the annular space with a large diameter between connecting outer circumferential plane 69 and the axial midpoint of second tapered component 55. The incoming vapor, then, flows out from outlet 43 and enters second connector 13 (arrow B) through exit-end orifice 45. Then, valve body 57 can move in the downstream direction until sliding component 75 of second end siding leg 71 touches the annular upstream end plane of cylindrical base 37. The motion of valve body 57 along the axis causes guiding hole 49 of upstream sliding leg 79 and sliding hole 51 of downstream sliding leg 71 on the inner circumferential planes thereof to slide together. As a result, valve body 57 will not tilt during the movement. If the vapor flow is disturbed, valve body 57 is pressed against inner circumferential plane 47 of body component 9 in a biased manner, possibly generating a fricative sound. Nevertheless, the presence of the inlet-end orifice at the edge of the upstream of first connector component 11 along the axis can stabilize the vapor flow. Note that upstream sliding leg 79 will not be pushed away from guiding hole 49 because upstream sliding leg 79 is of a length longer than the distance between downstream sliding leg 71 and upstream cylindrical base 37 as is shown in Figure 3 or the movable distance that valve body 57 travels along the longitudinal axis (from the valve open to valve closed position) provided that the valve body 57 is blocked.

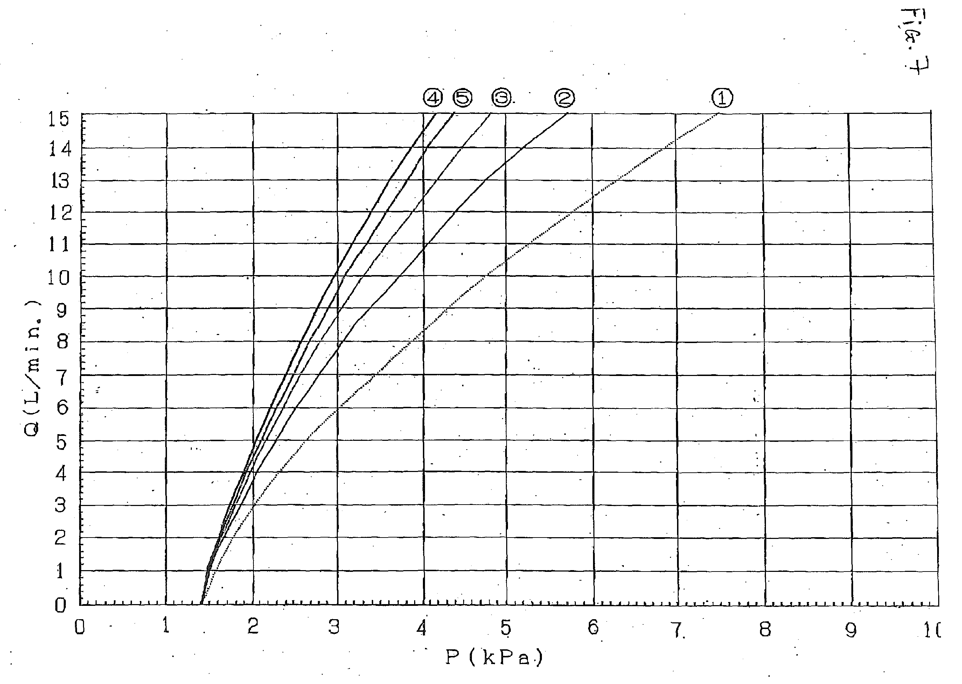

Figure 7 is a chart illustrating the pressure-flow rate (PQ) characteristic as a function of diameter or cross-sectional area of exit-end orifice 45.

Measurements were taken for the pressure-flow rate or valve properties for connector 1 with an embedded valve, where the inner diameter of outlet 43 was set to 8.0 mm; the spring properties of compression coil spring 81 were set such that valve-opening pressure of valve body 57 remains at 1.4 kPa; the diameter of exit-end orifice 45 was changed from 1.8 mm to 2,0 mm, 2.2 mm, and 2.4 mm; the pressure was measured in kPa at first connector component 11 side and the flow rate was measured in L/min or l/m for the fluid passing through exit-end orifice 45. In the figure, the results of measurements are plotted in accordance with the following orifice diameters: 1.8 mm for Curve 1; 2.0 mm for Curve 2; 2.2 mm for Curve 3; 2.4 mm for Curve 4; 2.4 mm for Curve 5 wherein in Curve 5, the spring constant of compression coil spring 81 was increased 5 times while maintaining the valve-opening pressure constant at 1.4 kPa. As is apparent from Figure 7, the PQ properties change little even though the spring constant of the compression coil spring is increased 5 times. However, any change in orifice diameter significantly changes the PQ properties. This means that even though aging change the spring properties to some extent, such a change will not be significant.

If the connector and embedded valve of the present invention is installed in the evaporation piping in an automobile, for example, the vapor generated in the fuel tank can be handled appropriately.

## Claims

1. A connector comprising a connector housing, having a fluid path for fluid to flow through the connector and an embedded valve embedded in the fluid path of the connector housing, a first connector component disposed upstream of the embedded valve for upstream piping and a second connector component disposed downstream of the embedded valve for downstream piping; wherein the embedded valve comprises:
a valve seat provided in the fluid path of the connector housing having a valve gate;
a valve body which opens or closes the valve gate on the valve seat;
a compression coil spring which pushes the valve body in the upstream direction, and wherein the connector further comprises an exit-orifice disposed downstream of the valve seat for restricting the discharge rate of fluid flow through the exit orifice.

2. The connector as defined in Claim 1 wherein said connector housing has an inlet-orifice disposed upstream of the embedded valve for stabilizing the flow of fluid into said connector through said upstream piping.

3. The connector as defined in claim 1 wherein said valve body has an upstream sliding guide and a plurality of upstream sliding legs with the connector housing having a guiding passageway in which the upstream sliding legs move to cause the valve body to open and close.

4. The connector as defined in claim 3 wherein the upstream sliding legs have a predetermined length which is larger than the distance of movable travel of said valve body between the open and closed valve position such that the upstream sliding guide remains within the guiding passageway of said connector housing when the valve body is in the open position.

5. The connector as defined in claim 1 wherein said second connector component is aligned in a direction perpendicular to the longitudinal axis of said connector and has a tubular geometry which extends transversely of the connector housing for forming a first and second connector coupling of substantially identical geometry disposed in opposite directions with each coupling having protruding flanges about the outer circumference adapted for connection to the downstream tubular piping.

6. The connector as defined in claim 2 wherein said connector housing has an inlet passageway upstream of said embedded valve of substantially cylindrical geometry and the size of said inlet orifice is about one half of the diameter of the inlet passageway.

7. The connector as defined in claim 1 wherein said connector housing has an outlet passageway downstream of said embedded valve of substantially cylindrical geometry and the size of the exit orifice is about one fourth of the diameter of the outlet passageway.
